# EUROPEAN PATENT SPECIFICATION

(11) **EP 1 759 298 B1**
(45) Date of publication and mention of the grant of the patent: **25.02.2009**
(21) Application number: 05749086.4
(22) Date of filing: 09.06.2005
(51) Int. Cl.: G06F 13/38

(54) **BUS CONTROLLER FOR TRANSFERRING DATA**
BUS-CONTROLLER ZUR DATENÜBERTRAGUNG
CONTROLEUR DE BUS POUR LE TRANSFERT DE DONNEES

(30) Priority: 15.06.2004 EP 04102728
(43) Date of publication of application: 07.03.2007
(73) Proprietor: NXP B.V., 5656 AG Eindhoven (NL)
(72) Inventor: CHANG, Yeow, K., NL-5656 AA Eindhoven (NL); MOO, Weng, F., NL-5656 AA Eindhoven (NL)
(74) Representative: Williamson, Paul Lewis
(86) International application number: PCT/IB2005/051898
(87) International publication number: WO 2005/124567

(56) References cited:
- US-A1- 2003 005 197
- US-A1- 2003 101 311
- US-A1- 2004 093 441

## Description

This invention relates to a bus controller, and in particular to a device which can be included in electronic equipment in order to control the transfer of data to and from other electronic equipment using an external bus.

It is becoming common for electronic equipment to be provided with interfaces allowing for the transmission of data using a Universal Serial Bus (USB).

When items of electronic equipment are interconnected using the USB system, one item of equipment is designated as the USB Host, while the other items are designated as USB Devices. It is the USB Host which is responsible for initiating and scheduling communications over the USB. For example, the USB Host may be a personal computer (PC), and it may be connected to various USB Devices, such as a printer, a digital camera and a personal digital assistant (PDA).

However, it is also possible to use a USB connection to connect, for example, a camera directly to a printer without requiring connection through a PC. In order to be able to function as a USB Host, an item of equipment, which may be the camera in this example, must be provided with the required functionality, and the present invention relates more particularly to a device, in the form of an integrated circuit, which can be included in an item of equipment, in order to provide it with this functionality. However, it will be appreciated that the item of equipment has other functions, and its USB interconnectivity is only a small part of its functionality. Moreover, it is desirable to be able to include the device into items of equipment, in order to provide them with the ability to act as a USB Host, without requiring those items of equipment to have especially powerful processors.

It is therefore desirable for the device to be able to operate with the smallest possible dependence on the central processing unit (CPU) of the item of equipment in which it is to be incorporated. For example, the device preferably operates as a slave in the bus system of the item of equipment, allowing the CPU to remain as the bus master. Further, it is desirable for the device to place the smallest possible processing burden on the CPU, and in particular to minimize the number of interrupt requests to the CPU. Further, the device should not depend on the CPU using any particular operating system, so that the device can be incorporated in the widest possible range of the items of equipment.

It is known to provide a USB host controller in which transfer-based transfer descriptors are used to define the USB transactions.

According to the present invention, there is provided a host controller, in which, for each transfer descriptor, there is provided a series of bits, with each bit corresponding to a sub-frame in a frame, such that data is transferred only during sub-frames in which the corresponding bit is set to an active value.

In the Figures:
Fig. 1 is a block schematic diagram of an item of electronic equipment, incorporating a host controller in accordance with the present invention.
Fig. 2 is a block schematic diagram of a host controller in accordance with the present invention.
Fig. 3 is an illustration showing the structure of software in the host controller of Fig. 2.
Figs. 4 and 5 are timing diagrams, illustrating the format of USB data transmitted from the host controller.
Fig. 6 gives an overview of the isochronous high speed packet transfer descriptor according to the invention.
Figs. 7 and 8 are timing diagrams, illustrating the format of USB data transmitted from the host controller.
Fig. 9 shows how a polling rate for an endpoint can be varied.
Fig. 10 gives an overview of the interrupt high speed packet transfer descriptor according to the invention.
Figs. 11 and 12 are timing diagrams, illustrating the format of USB data transmitted from the host controller.
Fig. 13 gives an overview of the bulk high speed packet transfer descriptor according to the invention.

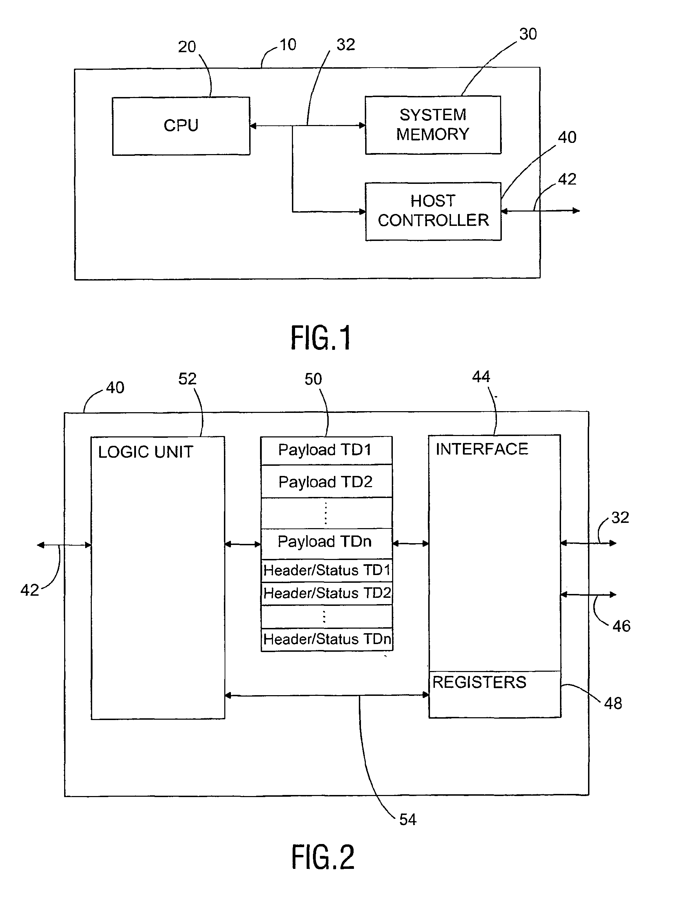

Fig. 1 is a block schematic diagram of the relevant parts of an item 10 of electronic equipment, operating as a USB host. The invention is particularly applicable to devices such as cameras, set-top boxes, mobile phones, or PDAs, in which the functional limitations of the microprocessor and the system memory are more relevant, rather than in personal computers (PCs). However, the invention is applicable to any device which can operate as a USB host.

It will be apparent that the device 10 will have many features, which are not shown in Fig. 1, since they are not relevant to an understanding of the present invention.

The device 10 has a host microprocessor (CPU) 20, which includes a processor core. The CPU 20 is connected to a system memory 30 by means of a peripheral bus 32.

A host controller 40 is also connected to the host microprocessor 20 and the system memory 30, by means of the peripheral bus, or memory bus, 32. The host controller 40 has an interface for a USB bus 42, through which it can be connected to multiple USB devices. In this illustrated embodiment, the host controller 40 is a USB 2.0 host controller, and features of the host controller not described herein may be as specified in the USB 2.0 specification.

As is conventional, the host controller 40 is adapted to retrieve data which is prepared by the processor 20 in a suitable format, and to transmit the data over the bus interface. In USB communications, there are two categories of data transfer, namely asynchronous transfer and periodic transfer. Control and bulk data are transmitted using asynchronous transfer, and isochronous and interrupt data are transmitted using periodic transfer. A Queue Transaction Descriptor (qTD) data structure is used for asynchronous transfer, and an Isochronous Transaction Descriptor (iTD) data structure is used for periodic transfer.

The processor 20 prepares the data in the appropriate structure, and stores it in the system memory 30, and the host controller 40 must then retrieve the data from the system memory 30.

Fig. 2 shows in more detail the structure of the embedded USB host controller 40.

As mentioned above, the host controller 40 has a connection for the memory bus 32, which is connected to an interface 44, containing a Memory Management Unit, a Slave DMA Controller, an interrupt control unit, and hardware configuration registers. The interface 44 also has a connection 46 for control and interrupt signals, and registers 48 which support the RAM structure and the operational registers of the host controller 40.

The interface 44 is connected to the on-chip RAM 50 of the host controller, which in this preferred embodiment is a dual port RAM, allowing data to be written to and read from the memory simultaneously, but could equivalently be a single port RAM with an appropriate arbiter. The memory 50 is connected to the host controller logic unit 52, which also contains an interface for the USB bus 42. Control signals can be sent from the registers 48 to the logic unit 52 on an internal bus 54.

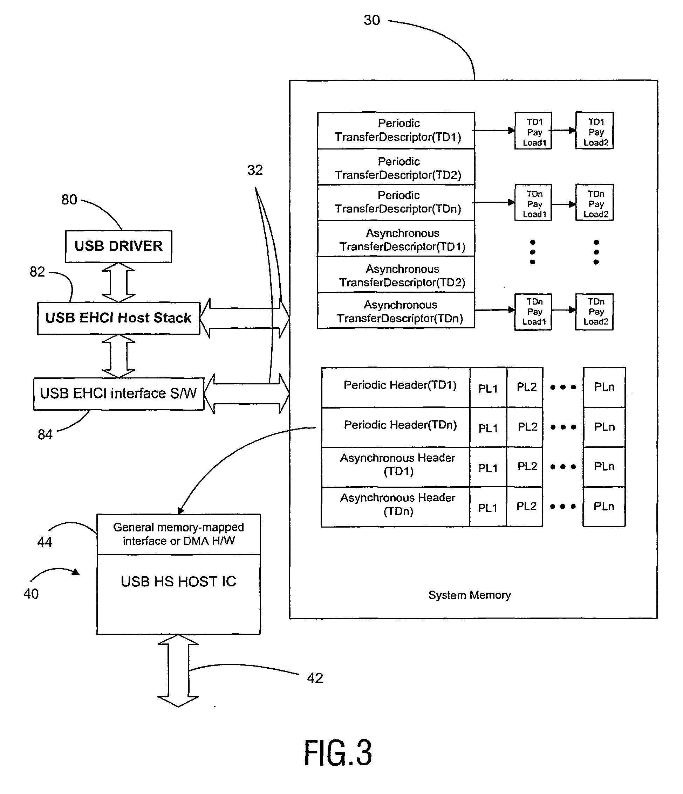

Fig. 3 is a schematic diagram showing in part the software operating on the host controller 40, in order to illustrate the method of operation of the device according to the invention.

The host controller 40 runs USB driver software 80 and USB Enhanced Host Controller Interface software 82, which are generally conventional.

The host controller 40 also runs USB EHCI interface software 84, which prepares a list of transfer-based transfer descriptors for every endpoint to which data is to be transmitted.

The EHCI interface software 84 is written such that it uses the parameters which are generated by the EHCI host stack 82 for the existing periodic and asynchronous headers, and can be used for all different forms of USB transfer, in particular high speed USB transfer, such as high speed isochronous, bulk, interrupt and control and start/stop split transactions.

The host microprocessor 20 writes the transfer-based transfer descriptors into the RAM 50 of the host controller 40 through the peripheral bus 32, without the host controller 40 requiring to master the bus 32. In other words, the host controller 40 acts only as a slave. The transfer-based transfer descriptors can then be memory-mapped into the RAM 50 of the host controller 40.

Advantageously, the built-in memory 50 of the host controller 40 is mapped in the host microprocessor 20, improving the ease with which transactions can be scheduled from the host microprocessor 20.

The use of a dual-port RAM 50 means that, while one transfer-based transfer descriptor is being executed by the host controller 40, the host microprocessor 20 can be writing data into another block space.

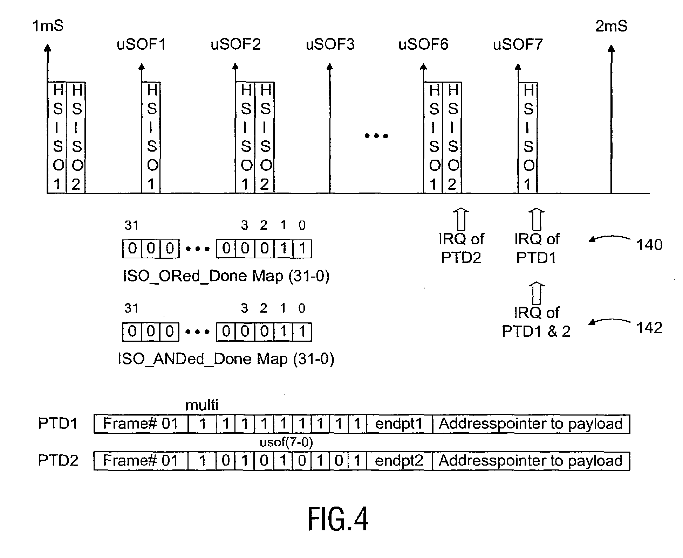

Fig. 4 illustrates the format of one USB frame, divided into multiple micro-frames, in which data is transmitted from the host controller 40 over the USB bus 42. As is conventional, multiple transactions, including transactions of different transfer types, may be sent within one micro-frame. Again, as is conventional, high speed isochronous transfer is always first, followed by high speed interrupt transfer, and full speed and low speed Start Split and Complete Split transfers, with high speed bulk data occupying the remaining time in the micro-frame. Fig. 4 shows the way in which multiple high speed isochronous transactions may be sent to one or more endpoints.

Specifically, in Fig. 4, two high speed isochronous transfer descriptors are being processed in a single millisecond from 1ms - 2ms. This represents a frame, which is made up of eight micro-frames, beginning at uSOF0, uSOF1, ..., uSOF7 respectively. Fig. 4 also shows the formats of the corresponding packet transfer descriptors, PTD1, PTD2, relating to different endpoints (endpt1, endpt2) for respective IN or OUT transactions. Each of the packet transfer descriptors, PTD1, PTD2 contains a series of eight bits, labelled usof(7-0), and these bits may take an active value (that is, a "1") or a non-active value, (that is, a "0"). Payload data is then transferred when all of the parameters of the packet transfer descriptors are met, namely during the appropriate Frame #, and during the micro-frames when the usof bit is high.

Thus, in Fig. 4, payload data (HSISO1) relating to the packet transfer descriptor PTD1 is sent during all eight micro-frames, while payload data (HSISO2) relating to the packet transfer descriptor PTD2 is sent only during the four micro-frames beginning at uSOF0, uSOF2, uSOF4 and uSOF6, for which the respective usof bits are set high.

When the packet transfer descriptor parameter multi takes the value 1, only 1 transaction of Max Packet Data Size is sent out for each endpoint in each micro-frame.

When the payload data relating to a packet transfer descriptor has finished, a hardware interrupt is sent to the CPU 20. These IRQs can be set active when the individual packet transfer descriptors are complete, as shown at 140 in Fig. 4, or only when both packet transfer descriptors are complete, as shown at 142 in Fig. 4.

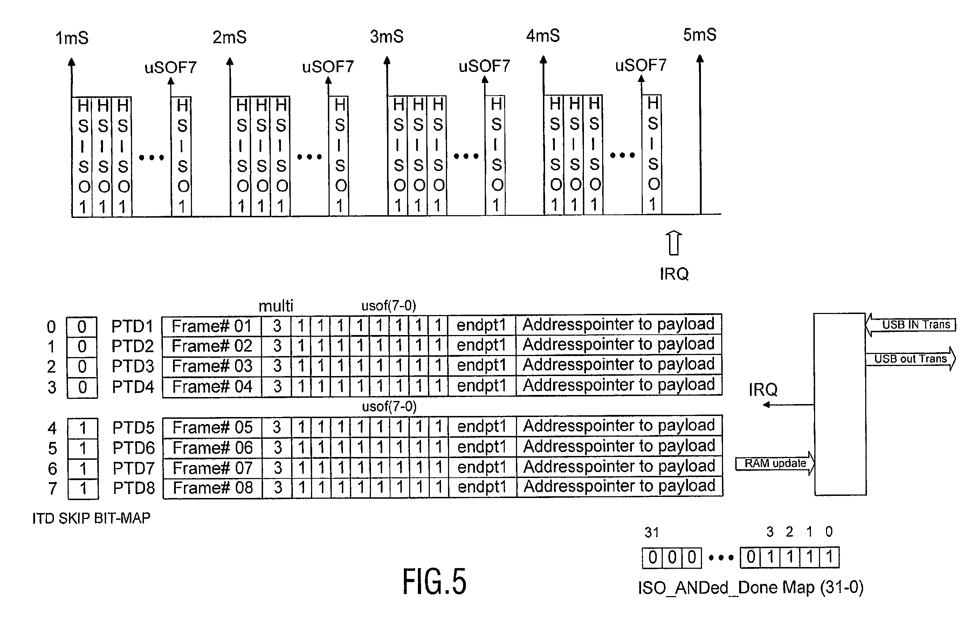

Fig. 5, shows a multi-millisecond transfer situation, in which four high speed isochronous transfer descriptors are being processed over a period from 1 ms - 5ms. This represents four frames, each made up of eight micro-frames, with only two micro-frames in each frame, being shown, for clarity. Fig. 5 also shows the formats of the corresponding packet transfer descriptors, PTD 1 - PTD8. In this case, each of the eight packet transfer descriptors, PTD1 - PTD8 relates to the same endpoint (endpt1). Also, each of the packet transfer descriptors, PTD1 - PTD8 contains a series of eight bits, labelled usof(7-0), and these bits may take an active value (that is, a "1") or a non-active value, (that is, a "0"). Payload data is then transferred when all of the parameters of the packet transfer descriptors are met, namely during the appropriate Frame #, and during the micro-frames when the usof bit is high.

Thus, in Fig. 5, payload data (HSISO1) relating to the packet transfer descriptor PTD1 is sent during all eight micro-frames of frame #O1, while payload data (HSISO1) relating to the packet transfer descriptor PTD2 is sent during all eight micro-frames of frame #02, and so on. Thus, defming multiple isochronous packet transfer descriptors allows multi-millisecond transactions.

Further, in this case, the packet transfer descriptor parameter multi takes the value 3, and so three transactions of Max Packet Data Size are sent out for each endpoint in each micro-frame.

Thus, the packet transfer descriptors PTD1 - PTD4 are processed over a period from 1ms - 5ms. While the packet transfer descriptors PTD1 - PTD4 are being sent, new packet transfer descriptors PTD5 - PTD8 for the next 4ms can be prepared. A SKIP bitmap can be set active until all packet transfer descriptors PTD5 - PTD8 are prepared, and then the bitmap can be unskipped.

An IRQ only happens to indicate that the first 4 ms are completed, and then the data for IN Token can be read back.

There is therefore a continuous flow of USB data at the maximum USB data rate of 24KB/ms (that is, 1024 bytes per transaction x 3 transactions in each micro-frames x 8 micro-frames per millisecond).

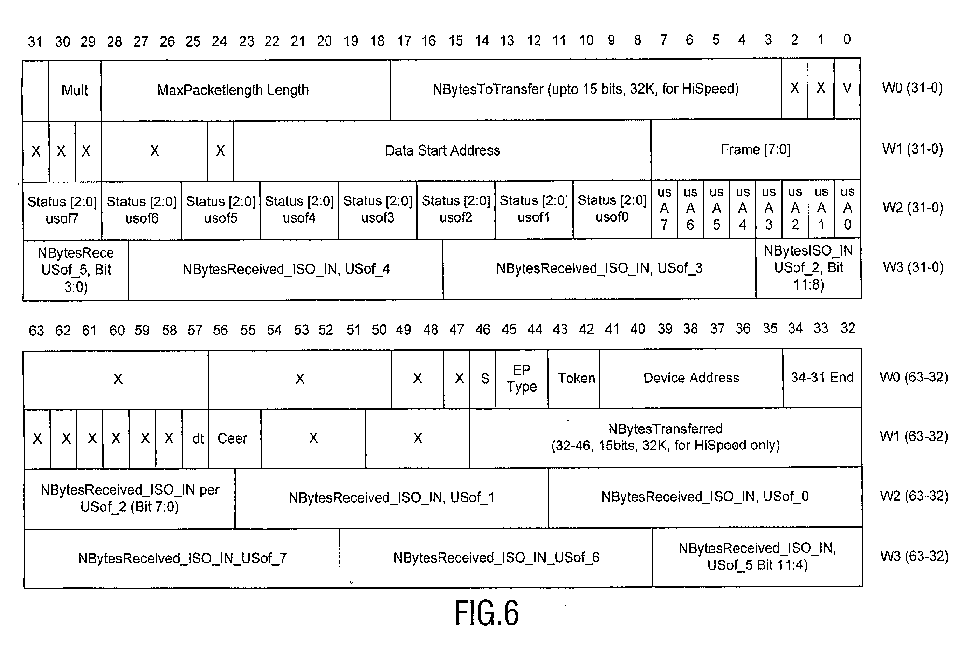

Fig. 6 gives an overview of the isochronous high speed packet transfer descriptor according to the invention.

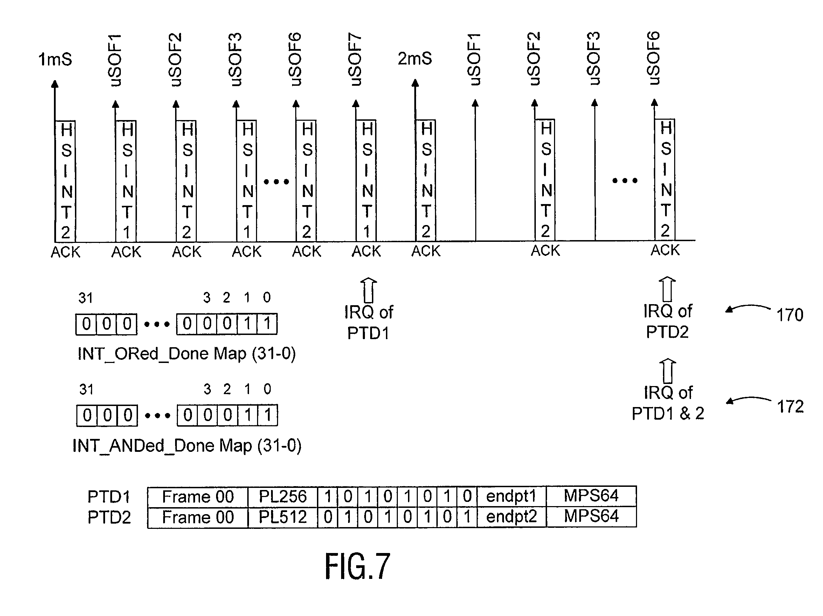

Fig. 7 shows a situation in which two high speed interrupt transfer descriptors are being processed over a two millisecond period from 1ms - 3ms. Each millisecond represents a frame, which is made up of eight micro-frames, beginning at uSOF0, uSOF1, ..., uSOF7 respectively. Fig. 7 also shows the formats of the corresponding packet transfer descriptors, PTD1, PTD2, relating to different endpoints (endpt1, endpt2). Each of the packet transfer descriptors, PTD1, PTD2 contains a series of eight bits, labelled usof(7-0), and these bits may take an active value (that is, a "1") or a non-active value, (that is, a "0"). Payload data is then transferred during the micro-frames when the usof bit is high.

Thus, in Fig. 7, payload data (HSINT1) relating to the packet transfer descriptor PTD1 is sent during the four micro-frames beginning at uSOF1, uSOF3, uSOF5 and uSOF7, for which the respective usof bits are set high, while payload data (HSINT2) relating to the packet transfer descriptor PTD2 is sent only during the four micro-frames beginning at uSOF0, uSOF2, uSOF4 and uSOF6, for which the respective usof bits are set high.

Each of the packet transfer descriptors, PTD1, PTD2 also indicates the size of the payload (PL), and it will be noted that the payload of PTD2 is double the size of the payload of PTD1. Therefore, while PTD1 is completed during the first miilisecond, payload data (HSINT2) relating to the packet transfer descriptor PTD2 is also sent during the four micro-frames beginning at uSOF0, uSOF2, uSOF4 and uSOF6 of the millisecond from 2ms - 3ms.

When the payload data relating to a packet transfer descriptor has finished, a hardware interrupt is sent to the CPU 20. These IRQs can be set active when the individual packet transfer descriptors are complete, as shown at 170 in Fig. 7, or only when both packet transfer descriptors are complete, as shown at 172 in Fig. 4.

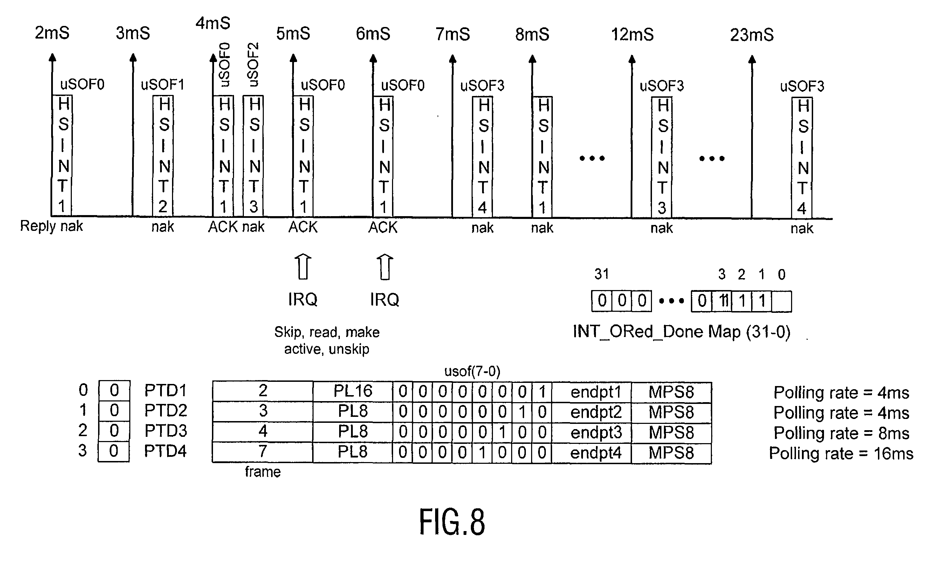

Fig. 8 shows a multi-millisecond transfer situation, in which four high speed interrupt transfer descriptors are being processed over a period from 2ms - 23ms. As before, each miilisecond represents a frame, each frame being made up of eight micro-frames.

Fig. 8 also shows the formats of the corresponding packet transfer descriptors, PTD 1 - PTD4. In this case, each of the four packet transfer descriptors; PTD1 - PTD4 relates to a respective different endpoint (endpt1, endpt2, endpt3, endpt4). Also, each of the packet transfer descriptors, PTD1 - PTD4 contains a series of eight bits, labelled usof(7-0), and these bits may take an active value (that is, a "1") or a non-active value, (that is, a "0"). Payload data is then transferred only during the appropriate Frame # specified in the packet transfer descriptor, and during the micro-frames when the usof bit is high.

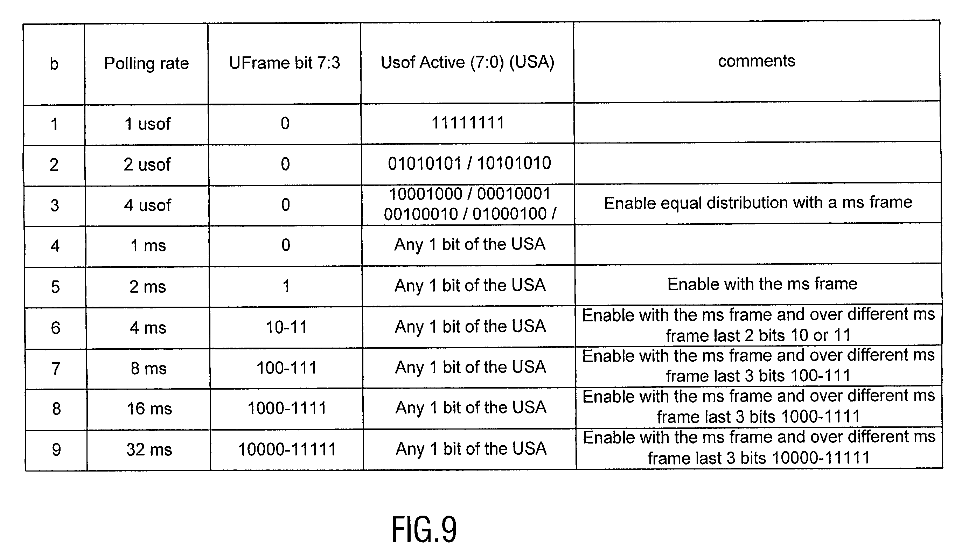

The packet transfer descriptor also specifies the payload (PL) size, the maximum packet size (MPS) and the polling rate for the transfer. Thus, the polling rate can be varied as required, between 1 micro-frame and 32 frames in this example. Fig. 9 is a table showing the available values of the polling rate. When two endpoints have the same polling rate, their transactions can be distributed on two different frames. This can be done by hardware activating the transactions based on the last 2 bits of the frame numbers.

Fig. 8 shows how this works in practice. For example, data intended for endpoint 3, described by packet transfer descriptor PTD3, is NAKed in the frame at 4ms, and so is retransmitted in the frame at 8ms since it has a polling rate of 8ms. Similarly, data intended for endpoint 4, described by packet transfer descriptor PTD4, is NAKed in the frame at 7ms, and so is retransmitted in the frame at 23ms since it has a polling rate of 16my.

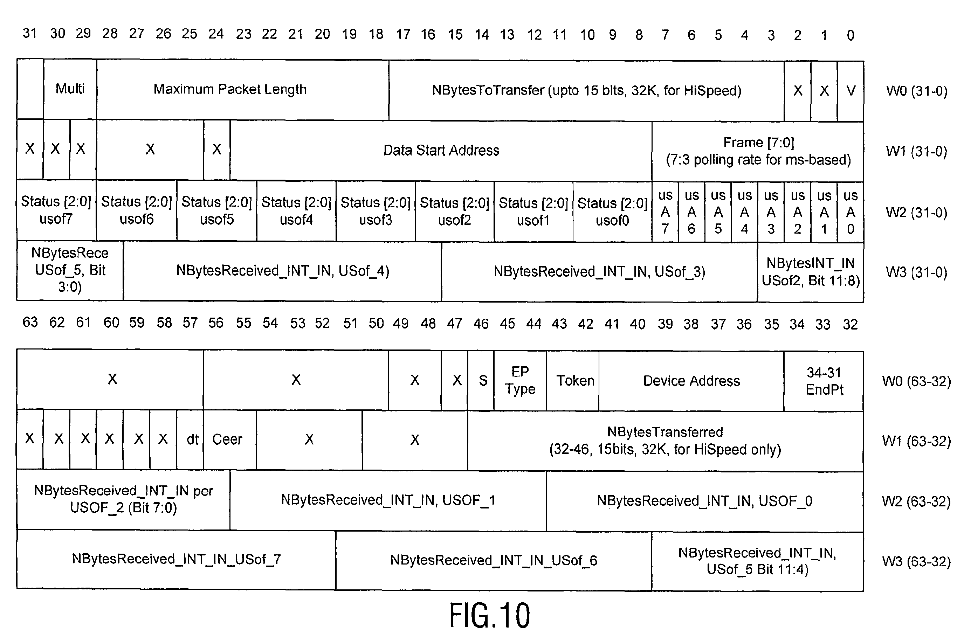

Fig. 10 gives an overview of the interrupt high speed packet transfer descriptor according to the invention.

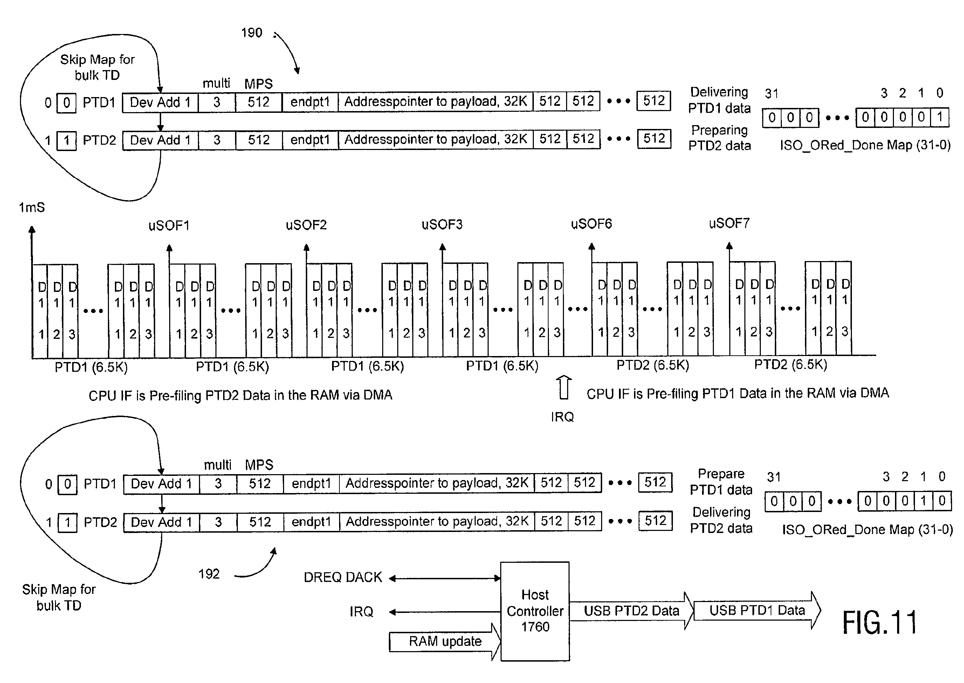

Fig. 11 illustrates the transfer mechanism for bulk transfer of data. Thus, in one frame, during the period of the first four micro-frames, beginning at uSOF0-uSOF3, data according to a first packet transfer descriptor PTD1 is being delivered, while data according to a second packet transfer descriptor PTD2 is being prepared, as shown at 190 in Fig. 11. During the period of the second four micro-frames, beginning at uSOF4-uSOF7, data according to the second packet transfer descriptor PTD2 is being delivered, while data according to the first packet transfer descriptor PTD1 is being prepared, as shown at 192 in Fig. 11. This allows a high data transfer rate to an endpoint, while requiring only two interrupts per millisecond.

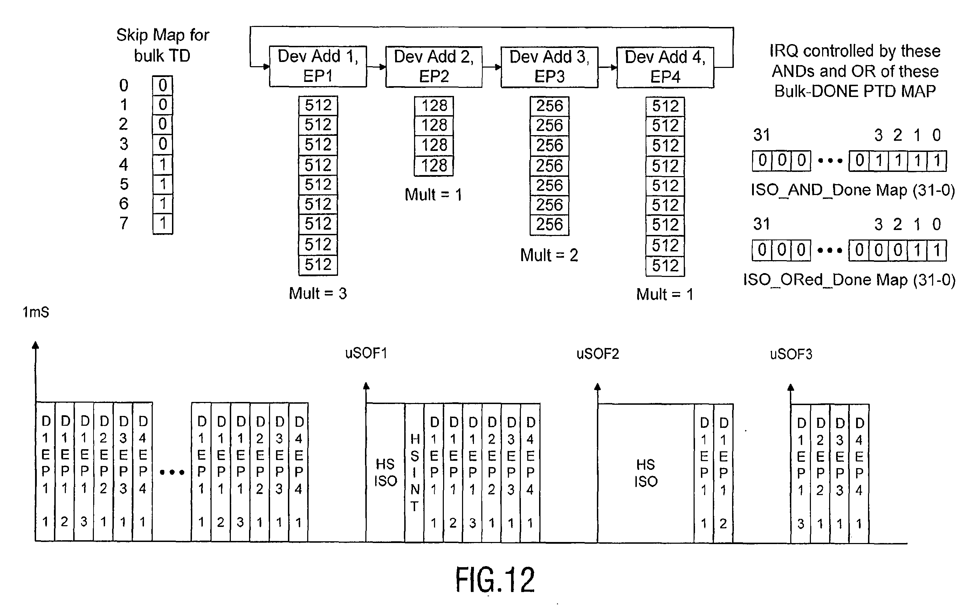

As is conventional, bulk data is sent in a micro-frame only after the isochronous and interrupt data has been sent. Fig. 12 shows a situation in which four high speed interrupt transfer descriptors are being processed over several micro-frames, but only after the isochronous data (HSISO) and interrupt data (HSINT) has been sent in that micro-frame.

Fig. 12 also shows the formats of the corresponding packet transfer descriptors, PTD1 - PTD4. In this case, each of the four packet transfer descriptors, PTD1 - PTD4 relates to a respective different endpoint (endpt1, endpt2, endpt3, endpt4). The parameter multi indicates the number of bulk data packets that can be transferred according to a packet transfer descriptor before data is transferred according to any other packet transfer descriptor in any micro-frame. Thus, the first packet transfer descriptor PTD1 has the value 3 for the parameter multi, and so three packets are transferred in the micro-frame beginning at . 1ms, before data is transferred according to any other packet transfer descriptor. In this case, there was no isochronous or interrupt data, and so the cycle of bulk data transfer can be repeated in the micro-frame.

However, it will be noted that, in the micro-frame beginning at uSOF2, there was a large amount of isochronous data, and so the cycle of bulk data transfer could not be completed within the micro-frame.

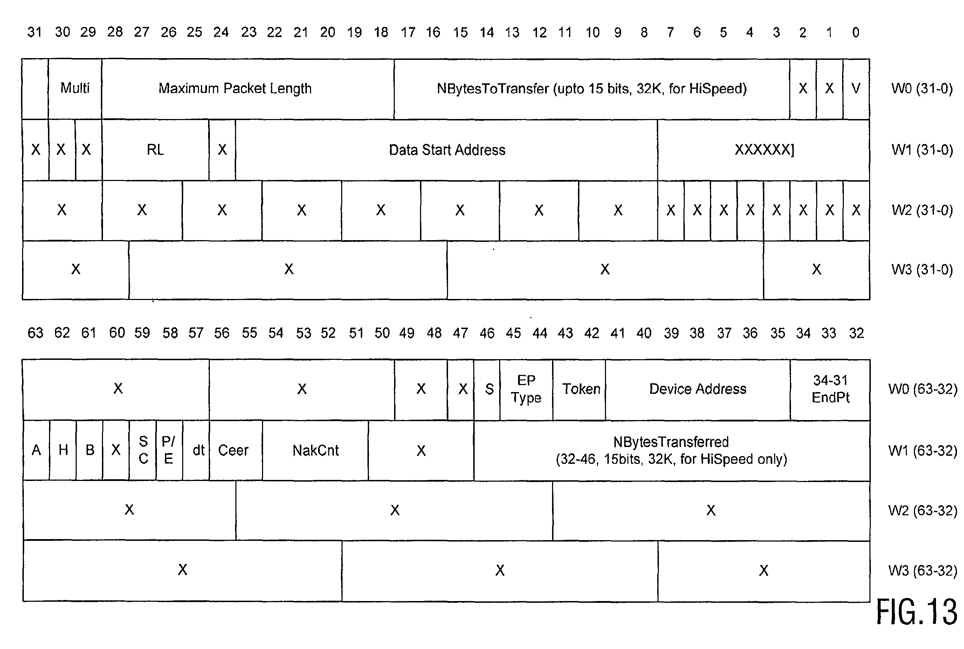

Fig. 13 gives an overview of the high speed packet transfer descriptor for bulk and control endpoints, according to the invention.

## Claims

1. A host controller, for use in transferring data over a bus communication system in frames and micro-frames, in which each data transfer is described by a packet transfer descriptor, **characterized in that**:
a packet transfer descriptor for a data transfer includes a bit map, such that data is transferred according to the packet transfer descriptor only during those micro-frames of a frame which correspond to bits of the bit map for which the bit value has been set to an active value.

2. A host controller as claimed in claim 1, for use in transferring data over said bus communication system either to isochronous endpoints or to interrupt endpoints,
wherein packet transfer descriptors for data transfer both to isochronous endpoints and to interrupt endpoints include said bit map.

3. A host controller as claimed in claim 2, wherein the packet transfer descriptor for data transfer to interrupt endpoints further specifies a variable polling rate.

4. A host controller as claimed in any preceding claim, for use in a bus communication device comprising a host microprocessor and a system memory, the host controller further comprising:
- a first interface for connection to a memory bus which connects the host microprocessor and the system memory, such that the host controller is adapted to act only as a slave on the memory bus; and
- a second interface, for connection to the bus communication system.

5. A method of operation of a host controller, for transferring data over a bus communication system in frames and micro-frames, the method comprising:
describing each data transfer by a packet transfer descriptor, **characterized in that**:
a packet transfer descriptor for a data transfer includes a bit map, and wherein the method comprises transferring data according to the packet transfer descriptor only during those micro-frames of a frame which correspond to bits of the bit map for which the bit value has been set to an active value.

6. A method as claimed in claim 5, for transferring data over said bus communication system either to isochronous endpoints or to interrupt endpoints,
wherein the packet transfer descriptors for data transfer both to isochronous endpoints and to interrupt endpoints include said bit map.

7. A method as claimed in claim 6, wherein the packet transfer descriptor for data transfer to interrupt endpoints further specifies a variable polling rate.

## Patentansprüche

1. Host-Steuervorrichtung für die Verwendung bei der Übertragung von Daten über ein Buskommunikationssystem in Rahmen und Mikrorahmen, bei der jede Datenübertragung durch einen Paketübertragungsdeskriptor beschrieben ist, **dadurch gekennzeichnet, dass**:
ein Paketübertragungsdeskriptor für eine Datenübertragung ein Bit-Abbild enthält, so dass Daten gemäß dem Paketübertragungsdeskriptor nur während derjenigen Mikrorahmen eines Rahmens übertragen werden, die den Bits des Bit-Abbildes entsprechen, für die der Bitwert auf einen aktiven Wert gesetzt worden ist.

2. Host-Steuervorrichtung nach Anspruch 1 für die Verwendung bei der Übertragung von Daten über das Buskommunikationssystem entweder zu isochronen Endpunkten oder zu Unterbrechungsendpunkten,
wobei Paketübertragungsdeskriptoren für die Datenübertragung sowohl zu isochronen Endpunkten als auch zu Unterbrechungsendpunkten das Bit-Abbild enthalten.

3. Host-Steuervorrichtung nach Anspruch 2, wobei der Paketübertragungsdeskriptor für die Datenübertragung zu Unterbrechungsendpunkten ferner eine variable Abfragerate spezifiziert.

4. Host-Steuervorrichtung nach irgendeinem der vorangehenden Ansprüche für die Verwendung in einer Buskommunikationsvorrichtung, die einen Host-Mikroprozessor und einen Systemspeicher umfasst, wobei die Host-Steuervorrichtung ferner umfasst:
eine erste Schnittstelle für die Verbindung zu einem Speicherbus, der den Host-Mikroprozessor und den Systemspeicher verbindet, so dass die Host-Steuervorrichtung dafür ausgelegt ist, nur als Folgegerät am Speicherbus zu agieren;
eine zweite Schnittstelle für die Verbindung mit dem Buskommunikationssystem.

5. Verfahren zum Betreiben einer Host-Steuervorrichtung für die Übertragung von Daten über ein Buskommunikationssystem in Rahmen und Mikrorahrmen, wobei das Verfahren umfasst:
Beschreiben jeder Datenübertragung durch einen Paketübertragungsdeskriptor, **dadurch gekennzeichnet, dass**:
ein Paketübertragungsdeskriptor für eine Datenübertragung ein Bit-Abbild enthält, wobei das Verfahren das Übertragen von Daten gemäß dem Paketübertragungsdeskriptor nur während derjenigen Mikrorahmen eines Rahmens enthält, die den Bits des Bit-Abbildes entsprechen, für die der Bitwert auf einen aktiven Wert gesetzt worden ist.

6. Verfahren nach Anspruch 5 für die Übertragung von Daten über das Buskommunikationssystem entweder zu isochronen Endpunkten oder zu Unterbrechungsendpunkten,
wobei die Paketübertragungsdeskriptoren für die Datenübertragung sowohl zu isochronen Endpunkten als auch zu Unterbrechungsendpunkten das Bit-Abbild enthalten.

7. Verfahren nach Anspruch 6, wobei der Paketübertragungsdeskriptor für die Datenübertragung zu Unterbrechungsendpunkten ferner eine veränderliche Abfragerate spezifiziert.

## Revendications

1. Contrôleur hôte, à utiliser pour un transfert de données sur un système de communication par bus en trames et micro-trames, dans lequel chaque transfert de données est décrit par un descripteur de transfert de paquet, **caractérisé en ce que** :
un descripteur de transfert de paquets destiné à un transfert de données comprend une configuration de binaires, de telle sorte que les données sont transférées selon le descripteur de transfert de paquets seulement pendant ces micro-trames d'une trame qui correspondent aux binaires de la configuration de binaires pour lesquels la valeur binaire a été établie à une valeur active.

2. Contrôleur hôte selon la revendication 1, à utiliser pour le transfert de données sur ledit système de communication par bus, soit vers des systèmes d'extrémité isochrones, soit vers des systèmes d'extrémité d'interruption,
dans lequel les descripteurs de transfert de paquets servant au transfert de données, à la fois vers les systèmes d'extrémité isochrones et vers les systèmes d'extrémité d'interruption, comportent ladite configuration de binaires.

3. Contrôleur hôte selon la revendication 2, dans lequel le descripteur de transfert de paquets servant au transfert de données vers des systèmes d'extrémité d'interruption spécifie, de plus, une vitesse d'interrogation variable.

4. Contrôleur hôte selon l'une quelconque des revendications précédentes, à utiliser dans un dispositif de communication par bus comprenant un microprocesseur hôte et une mémoire de système, le contrôleur hôte comportant, de plus :
une première interface pour une connexion à un bus de mémoire qui connecte le microprocesseur hôte et la mémoire de système, de telle sorte que le contrôleur hôte soit adapté pour agir seulement comme un esclave sur le bus de mémoire ; et
une seconde interface, en vue d'une connexion au système de communication par bus.

5. Procédé de fonctionnement d'un contrôleur hôte servant au transfert de données sur un système de communication par bus dans des trames et des micro-trames, le procédé consistant à :
décrire chaque transfert de données par un descripteur de transfert de paquet, **caractérisé en ce que** :
un descripteur de transfert de paquet destiné à un transfert de données comporte une configuration de binaires, et dans lequel le procédé consiste à transférer des données selon le descripteur de transfert de paquet seulement pendant ces micro-trames d'une trame qui correspondent aux binaires de la configuration de binaires pour lesquels la valeur binaire a été établie à une valeur active.

6. Procédé selon la revendication 5, servant à transférer des données sur ledit système de communication par bus , soit vers des systèmes d'extrémité isochrones, soit vers des systèmes d'extrémité d'interruption,
dans lequel les descripteurs de transfert de paquet destinés à un transfert de données à la fois vers des systèmes d'extrémité isochrones et vers des systèmes d'extrémité d'interruption, comportent ladite configuration de binaires.

7. Procédé selon la revendication 6, dans lequel le descripteur de transfert de données destiné à un transfert de données vers des systèmes d'extrémité d'interruption spécifie, de plus, une vitesse d'interrogation variable.
